# EUROPEAN PATENT APPLICATION

(11) **EP 2 549 619 A1**
(43) Date of publication of application: **23.01.2013**
(21) Application number: 12175664.7
(22) Date of filing: 10.07.2012
(51) Int. Cl.: H02J 7/00

(54) **Charge and discharge control apparatus**

(30) Priority: 19.07.2011 JP 2011157361
(71) Applicant: Kabushiki Kaisha Toyota Jidoshokki, Kariya-shi, Aichi 448-8671 (JP)
(72) Inventor: Kuraishi, Mamoru, Kariya-shi, Aichi 448-8671 (JP)
(74) Representative: TBK

(57) **Abstract**

A charge and discharge control apparatus equalizes the voltages of rechargeable battery cells by using a charger or a capacitor charged by an external power source, by using a first cell balancing unit which charges the rechargeable battery cells until their voltage values become equal to the maximum voltage value of the rechargeable battery cells, and an inductor for charging or discharging adjacent rechargeable battery cells from among the rechargeable battery cells, and by using a second cell balancing unit which sequentially equalizes the voltages of the adjacent rechargeable battery cells.

## Description

### Background of the Invention

### Field of the Invention

The present invention relates to a charge and discharge control apparatus that controls charging and discharging of a rechargeable battery cell.

### Description of the Related Art

Conventionally, cell balancing has been performed on a plurality of rechargeable battery cells installed in vehicles such as hybrid vehicles and electric vehicles in order to extend the charge-discharge cycle life of the cells. Cell balancing extends the charge-discharge cycle life of a rechargeable battery cell module by limiting the variations between voltage values or degradations which would be caused by the difference between charge-discharge characteristics of the rechargeable battery cells, which would be enhanced through charging or discharging, and which would be indicated when the cells are charged or discharged. Meanwhile, cell balancing prevents accidents which would be caused when only a specific rechargeable battery cell continues to be over-discharged or overcharged.

In conventional cell balancing, however, the lowest of the voltage values of rechargeable battery cells has been detected and the other rechargeable battery cells have been discharged until their voltage values become equal to the detected lowest voltage value. Accordingly, the discharged electricity has been wasted.

As a technology relating to cell balancing, a technology is known wherein a multiple serial storage cell using many serially connected storage cells enables the status of all cells with a simple configuration at a low cost to be monitored and prevents overcharge or over-discharge. According to the technology, voltage balance correcting circuits are provided for mutually equalizing the voltage of each of the storage cells of the multiple serial storage cell, and the circuits detect the voltage of a specific storage cell selected from the multiple serial storage cells and monitor the status of the multiple serial storage cell on the basis of the detection (see, for example, patent document 1).

Meanwhile, as an example, a technology is known wherein the voltages of rechargeable battery cells or rechargeable battery modules are equalized while energy for charging each rechargeable battery cell is not wasted. According to the technology, a plurality of circuits and coils of the circuits are electromagnetically coupled to other coils, wherein, in the circuits, the coils and switches are connected in series to each other and connected in parallel to rechargeable battery cells, and each switch is driven by a drive unit which drives the switches provided for each circuit. As a result, the rechargeable battery cells are charged or discharged by electromotive forces induced in each coil by electromagnetic induction between the coils when the switches are driven, equalizing the voltages between the rechargeable battery cells (see, for example, patent document 2).

In addition, as another example, a technology is known wherein battery characteristics in a battery pack, formed by assembling a plurality of battery cells, are detected, and the battery characteristics among the battery cells or battery cell groups are equalized according to the detection result. According to the technology, an auxiliary battery feeds power via a relay-type switch, and the operation of the equalization circuit is stopped by switching the relay-type switch 110 to an off state according to a circuit stop condition. In the meantime, the circuit stop condition can be altered on the basis of the detection result of the battery characteristics in the equalization circuit. As a result, power consumption in an equalizer of a battery pack is suppressed (see, for example, patent document 3).

### Prior Art Documents

### Patent Documents

Patent Document 1: Japanese Laid-open Patent Publication No. 2008-042970
Patent Document 2: Japanese Laid-open Patent Publication No. 2001-339865
Patent Document 3: Japanese Laid-open Patent Publication No. 2008-54416

### Summary of the Invention

The present invention was created in view of the aforementioned facts, and an object is to provide a charge and discharge control apparatus that increases the capacity of rechargeable battery cells and equalizes the voltages of the cells.

A charge and discharge control apparatus for charging and discharging serially connected rechargeable battery cells in accordance with an aspect of the present invention comprises a voltage measurement unit, a first cell balancing unit, a second cell balancing unit, and a control unit.

The voltage measurement unit measures a voltage of each of the rechargeable battery cells and a voltage of a capacitor that charges the rechargeable battery cells.

The first cell balancing unit uses a charger or the capacitor charged by an external power source to charge the rechargeable battery cells until the voltage value of each of the rechargeable battery cells becomes equal to a highest voltage value of the rechargeable battery cells.

Using an inductor for charging or discharging adjacent rechargeable battery cells from among the rechargeable battery cells, the second cell balancing unit sequentially equalizes the voltages of the adjacent rechargeable battery cells.

When the control unit detects that the charger is capable of supplying electricity, the control unit causes the charger to charge the rechargeable battery cells using the first cell balancing unit. When the charger is not connected and when the voltage value of the capacitor is equal to or higher than the highest of the voltage values of the rechargeable battery cells, the control unit causes the capacitor to charge the rechargeable battery cells using the first cell balancing unit. When the charger is not connected and when the voltage value of the capacitor is lower than the highest voltage value above, the control unit causes the second cell balancing unit to equalize the voltages of the rechargeable battery cells.

An aspect of the present invention achieves the effects of increasing the capacity of rechargeable battery cells and equalizing the voltages of the rechargeable battery cells.

### Brief Description of the Drawings

FIG. 1 illustrates an example of a charge and discharge control apparatus.
FIG. 2 is a flow diagram illustrating an example of the operation of the charge and discharge control apparatus.
FIG. 3 illustrates an example of the data structure of information used in an embodiment.
FIG. 4 is a flow diagram illustrating an example of the operation of a first cell balancing process.
FIG. 5 illustrates an example of the data structure of information used in first cell balancing.
FIG. 6 is a flow diagram illustrating an example of the operation of a second cell balancing process.
FIG. 7 illustrates an example of the data structure of information used in second cell balancing.

### Description of the Preferred Embodiments

In the following, details of an embodiment will be described on the basis of the drawings.

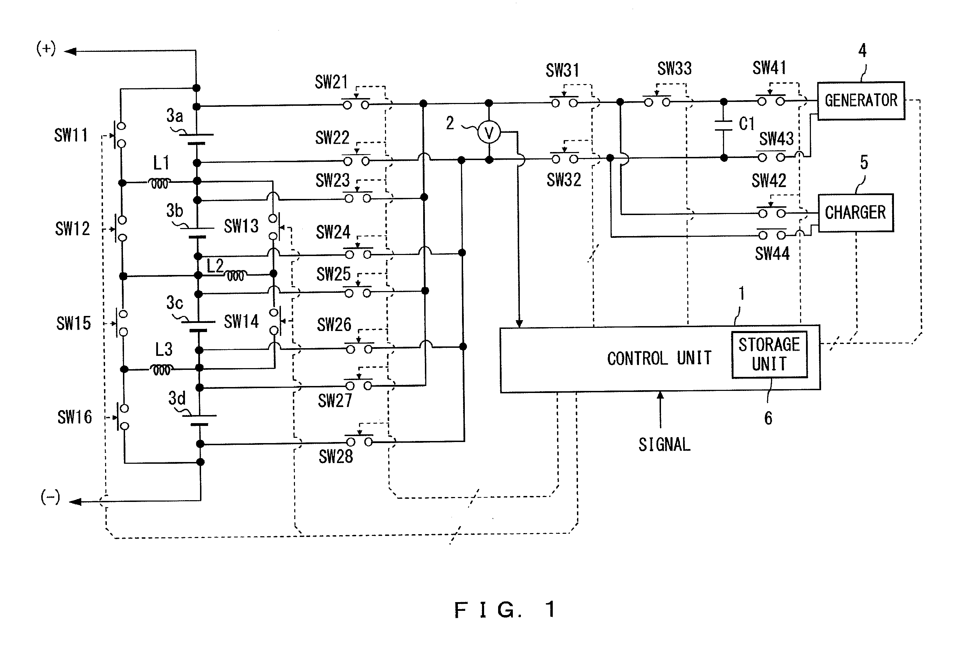

FIG. 1 illustrates an example of a charge and discharge control apparatus. The charge and discharge control apparatus in accordance with the embodiment may be installed in, but not limited to, vehicles such as plug-in hybrid vehicles, electric vehicles, and fork lift trucks.

The charge and discharge control apparatus in FIG. 1 comprises a control unit 1, a voltage measurement unit 2, rechargeable battery cells 3 (3a to 3d), a generator 4 (or an external power source), a charger 5, a capacitor C1, inductors L1 to L3, and switch elements. The switch elements indicate switch elements SW11 to SW16, SW21 to SW28, SW31 to SW33, and SW 41 to SW44.

The control unit 1 controls each part of the charge and discharge control apparatus. The control unit 1 may be, for example, a battery EUC (Electronic Control Unit) installed in a vehicle. The control unit 1 may use, for example, a CPU (Central Processing Unit), a programmable device FPGA (Field Programmable Gate Array), or a PLD (Programmable Logic Device). The control unit 1 may include a storage unit 6. The storage unit 6 stores data such as a program executed by the control unit 1, a cell balancing threshold, and various tables. The storage unit 6 may be a memory or a hard disk such as a ROM (Read Only memory) or a RAM (Random Access Memory). The storage unit 6 may have recorded in it data such as a parameter value and a variable value, or may be used as a work area during the execution time. Details of the control unit 1 will be described hereinafter.

The voltage measurement unit 2 measures the voltage of each of the rechargeable battery cells 3 and the voltage of the capacitor that charges the rechargeable battery cells 3.

The rechargeable battery cells 3a to 3d are serially connected to each other and are connected to a load (not illustrated). The load may be, for example, a vehicle drive motor.

The generator 4 may be, for example, a solar power generator or a wind power generator. As long as electricity can be supplied from outside to the capacitor C1, the generator 4 is not limited to a solar power generator or a wind power generator. The generator 4 may be provided with a function for decreasing electricity in accordance with a characteristic of the capacitor C1.

The charger 5 is an in-vehicle charger and has an AC/DC conversion function.

The capacitor C1 is charged by the generator 4 (or an external power source). A function for decreasing the voltage of the capacitor C1 in accordance with a characteristic of rechargeable battery cells 3 may be provided at the subsequent stage of the capacitor C1. The inductors L1 to L3 are used to equalize the voltages of adjacent rechargeable battery cells from among the rechargeable battery cells 3.

The switch elements SW11, SW13 and SW15 (or third switches) and the switch elements SW12, SW14 and SW16 (or fourth switches) are used by a second cell balancing unit, which will be described hereinafter. The switch elements SW21, SW23, SW25 and SW27 (or first switches) and the switch elements SW22, SW24, SW26 and SW28 (or second switches) are used by a first cell balancing circuit, which will be described hereinafter.

Moreover, switch elements SW31-SW33, SW41-SW44 are also provided for switching the circuit state depending on, for example, an operation time, a shut-down time, or a cell-balancing time. "Operation time" may correspond to, for example, the time period during which a vehicle is running; "shut-down time" may correspond to, for example, the time period during which a vehicle is parked; "cell-balancing time" may correspond to, for example, the time period during which cell balancing is performed using the first and second cell balancing circuits.

The switch elements SW11-SW16, SW21-SW28, SW31-SW33, SW41-SW44 are constituted by, for example, MOSFETs (Metal Oxide Semiconductor field Effect Transistors), and these elements are turned on or off by a control signal output from the control unit 1 (The dashed lines in FIG. 1 represent control lines). The switch elements are not limited to MOSFETs, and, as long as the elements have a switch function, they may be relays.

The control unit 1 will be described.

When the control unit 1 detects that the charger 5 has been connected, the unit 1 controls and causes the charger 5 to charge the rechargeable battery cells 3 (3a to 3d) by using the first cell balancing unit (the first cell balancing unit will be described hereinafter). When the charger 5 is not connected and the voltage value of the capacitor C1 is equal to or higher than the highest of the voltage values of the rechargeable battery cells 3, the control unit 1 controls and causes the capacitor C1 to charge the rechargeable battery cells 3 by using the first cell balancing unit. When the charger 5 is not connected and when the voltage value of the capacitor is lower than the highest of the voltage values of the rechargeable battery cells 3, the control unit 1 controls and causes the second cell balancing unit (the second cell balancing unit will be described hereinafter) to equalize the voltages of the rechargeable battery cells 3.

Here, the first cell balancing unit uses the charger 5 or the capacitor C1 charged by the generator 4 to charge the rechargeable battery cells 3 until the voltage values of rechargeable battery cells 3 reach the highest of the voltage values of the rechargeable battery cells 3.

When the capacitor C1 charges the rechargeable battery cells 3, in the first cell balancing unit, switches the switching elements SW21 to SW28 each provided for each of the rechargeable battery cells 3, so that the capacitor C1 to be connected in parallel to the rechargeable battery cells 3 in sequence.

To charge the rechargeable battery cell 3a, the positive terminal of the rechargeable battery cell 3a is connected to one terminal of the switch element SW21 (or the first switch), and the negative terminal of the rechargeable battery cell 3a is connected to one terminal of the switch element SW22 (or the second switch). The other terminal of the switch element SW21 is connected to one terminal of the capacitor C1, and the other terminal of the switch element SW22 is connected to the other terminal of the capacitor C1. In FIG. 1, the switch elements SW21, SW22, and SW31-SW33 are put in a conduction state, and the other switch elements are put in a cut-off state.

When the voltage value of the rechargeable battery cell 3a reaches the highest of the voltage values of the rechargeable battery cells 3a to 3d, the next rechargeable battery cell 3 will be selected.

To charge the rechargeable battery cell 3b, the positive terminal of the rechargeable battery cell 3b is connected to one terminal of the switch element SW23 (or the first switch), and the negative terminal of the rechargeable battery cell 3b is connected to one terminal of the switch element SW24 (or the second switch). The other terminal of the switch element SW23 is connected to one terminal of the capacitor C1, and the other terminal of the switch element SW24 is connected to the other terminal of the capacitor C1. In FIG. 1, the switch elements SW23, SW24, and SW31-SW33 are put in the conduction state, and the other switch elements are put in the cut-off state.

To charge the rechargeable battery cell 3c, the switch element SW25 (or the first switch) and the switch element SW26 (or the second switch) are used. In FIG. 1, the switch elements SW25, SW26, and SW31-SW33 are put in the conduction state, and the other switch elements are put in the cut-off state. To charge the rechargeable battery cell 3d, the switch element SW27 (or the first switch) and the switch element 28 (or the second switch) are used. In FIG. 1, the switch elements SW27, SW28, and SW31-SW33 are put in the conduction state, and the other switch elements are put in the cut-off state.

When the charger 5 (or a second external power source) charges the rechargeable battery cells 3, in the first cell balancing unit, the charger 5 switches the switching elements SW21 to SW28 each provided for each of the rechargeable battery cells 3, so as to be connected in parallel to the rechargeable battery cells 3 in sequence.

To charge the rechargeable battery cell 3a, the positive terminal of the rechargeable battery cell 3a is connected to one terminal of the switch element SW21 (or the first switch), and the negative terminal of the rechargeable battery cell 3a is connected to one terminal of the switch element SW22 (or the second switch). The other terminal of the switch element SW21 is connected to the charger 5. In FIG. 1, the switch elements SW21, SW22, SW31 and SW42 are put in the conduction state, and the other switch elements are put in the cut-off state.

To charge the rechargeable battery cell 3b, the positive terminal of the rechargeable battery cell 3b is connected to one terminal of the switch element SW23 (or the first switch), and the negative terminal of the rechargeable battery cell 3b is connected to one terminal of the switch element SW24 (or the second switch). The other terminal of the switch element SW23 is connected to the charger 5. In FIG. 1, the switch elements SW23, SW24, SW31 and SW42 are put in the conduction state, and the other switch elements are put in the cut-off state.

To charge the rechargeable battery cell 3c, the switch element SW25 (or the first switch) and the switch element SW26 (or the second switch) are used. In FIG. 1, the switch elements SW25, SW26, SW31 and SW42 are put in the conduction state, and the other switch elements are put in the cut-off state. To charge the rechargeable battery cell 3d, the switch element SW27 (or the first switch) and the switch element 28 (or the second switch) are used. In FIG. 1, the switch elements SW27, SW28, SW31 and SW42 are put in the conduction state, and the other switch elements are put in the cut-off state.

In this example, four rechargeable battery cells are described, but the number of the cells is not limited to four.

Using the inductors L1 to L3 for charging or discharging adjacent rechargeable battery cells from among the rechargeable battery cells 3, the second cell balancing unit sequentially equalizes the voltages of the adjacent rechargeable battery cells from among the rechargeable battery cells 3.

To equalize the voltage of the rechargeable battery cell 3a and that of the rechargeable battery cell 3b, in the second cell balancing unit, one terminal of the inductor is connected to the negative terminal of the rechargeable battery cell 3a from among the adjacent rechargeable battery cells 3 and to the positive terminal of the rechargeable battery cell 3b. Meanwhile, the positive terminal of the rechargeable battery cell 3a is connected to one terminal of the switch element SW11 (or the third switch). The negative terminal of the rechargeable battery cell 3b is connected to one terminal of the switch element SW12 (or the fourth switch), and the other terminal of the switch element SW11, the other terminal of the switch element SW12, and the other terminal of the inductor L1 are connected to each other. This will be referred to as a voltage equalization circuit that equalizes the voltage of the rechargeable battery cell 3a and that of the rechargeable battery cell 3b. In FIG. 1, the switch elements SW11 and SW12 are intermittently operated in turn (i.e., switching between the conduction state and the cut-off state is performed), charges are transferred between the rechargeable battery cells 3a and 3b, and the voltage of the rechargeable battery cell 3a and that of the rechargeable battery cell 3b are equalized. At this moment, the other switch elements are in the cut-off state. Meanwhile, a pulse signal for intermittently operating the switch elements in turn is output by the control unit 1 to the switch element SW11 of the voltage equalization circuit that equalizes the voltage of the rechargeable battery cell 3a and that of the rechargeable battery cell 3b, and an inversion pulse signal, which is an inversion of the pulse signal, is output by the control unit 1 to the switch element SW12. The pulse signal may be generated using, for example, a technology for generating a PWM (Pulse Width Modulation) signal.

When the voltages of the adjacent rechargeable battery cells 3a and 3b are equalized, the next adjacent battery cells, the rechargeable battery cells 3b and 3c, will be selected.

To equalize the voltages of the rechargeable battery cells 3b and 3c, the switch element SW13 (or the third switch) and the switch element SW14 (or the fourth switch) are used. In FIG. 1, the switch elements SW13 and SW14 are intermittently operated in turn, charges are transferred between the rechargeable battery cells 3b and 3c, and the voltage of the rechargeable battery cell 3b and that of the rechargeable battery cell 3c are equalized. At this moment, the other switch elements are put in the cut-off state.

To equalize the voltages of the rechargeable battery cells 3c and 3d, the switch element SW15 (or the third switch) and the switch element SW16 (or the fourth switch) are used. In FIG. 1, the switch elements SW15 and SW16 are intermittently operated in turn, charges are transferred between the rechargeable battery cells 3c and 3d, and the voltage of the rechargeable battery cell 3c and that of the rechargeable battery cell 3d are equalized. At this moment, the other switch elements are put in the cut-off state.

The aforementioned processes are repeated, and the cell balancing process is terminated when the voltage values of all of the rechargeable battery cells 3a to 3d fall within a predetermined range.

In this example, four rechargeable battery cells are described, but the number of the cells is not limited to four.

The operation of the charge and discharge control apparatus will be described in the following.

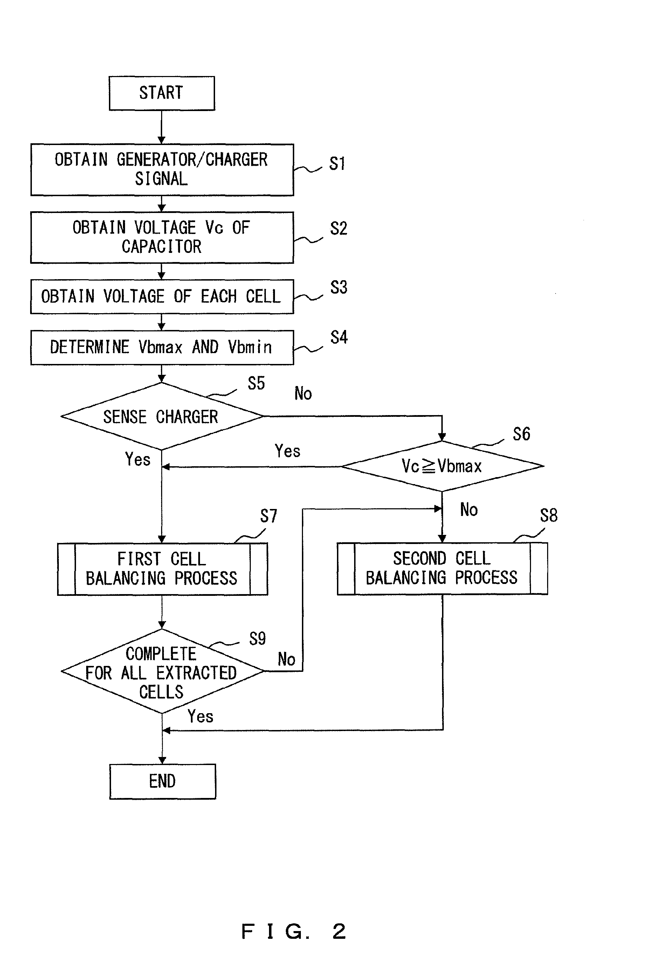

FIG. 2 is a flow diagram illustrating an example of the operation of the charge and discharge control apparatus.

The operation illustrated in FIG. 2 is started when cell balancing is performed. In step S1, the control unit 1 obtains a generator/charger signal sent from, for example, a host CPU. The generator/charger signal indicates whether the charger 5 has been connected or not, and, when the charger is connected, the signal sets, for example, a flag indicating that the charger has been connected.

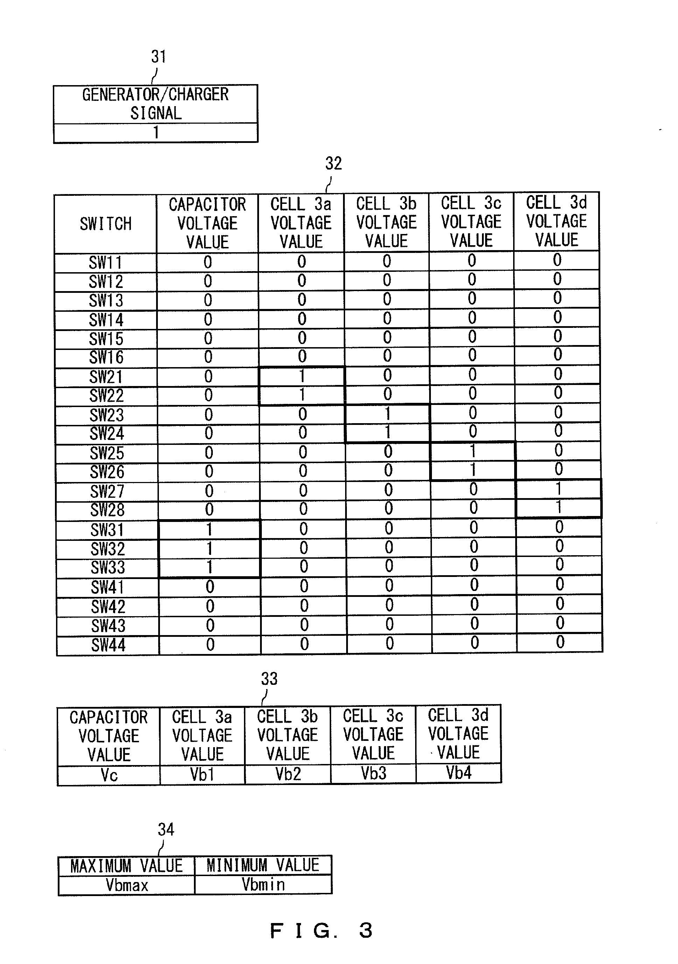

Information 31 in FIG. 3 contained in the generator/charger signal stores "1" when the charger 5 is connected; otherwise, it stores "0". FIG. 3 is a diagram illustrating an example of the data structure of information used in the embodiment.

In step S2, the control unit 1 switches the switch elements and obtains a capacitor voltage value Vc indicating the voltage of the capacitor C1 from the voltage measurement unit 2. Switch-switching information 32 in FIG. 3 is used to control the switching of the switches when a capacitor voltage value and a rechargeable-battery-cell voltage value are measured. The switch-switching information 32 includes information such as "switch", "capacitor voltage value", "cell 3a voltage value", "cell 3b voltage value", "cell 3c voltage value", and "cell 3d voltage value". "Switch" stores information for identifying the switch elements SW11-SW16, SW21-SW28, SW31-SW33, SW41-SW44. In this example, information of "SW11"-"SW16", "SW21"-"SW28", "SW31"-"SW33", "SW41"-"SW44" are stored. "Capacitor voltage value" stores the state of a switch element which is indicated when the voltage measurement unit 2 obtains the capacitor voltage value. In this example, "1"s indicating that "SW31", "SW32" and "SW33" should be in the conduction state and "0"s indicating that the other switch elements should be in the cut-off state are recorded. "Cell 3a voltage value", "cell 3b voltage value", "cell 3c voltage value", and "cell 3d voltage value" store the states of the switch elements which are indicated when the voltage measurement unit 2 obtains the voltage values of the rechargeable battery cells 3. In this example, "cell 3a voltage value" stores the states of the switch elements which are indicated when the voltage value of the rechargeable battery cell 3a is obtained, and has recorded in it "1"s indicating that "SW21" and "SW22" should be in the conduction state and "0"s indicating that the other switch elements should be in the cut-off state. "Cell 3b voltage value" stores the states of the switch elements which are indicated when the voltage value of the rechargeable battery cell 3b is obtained, and has recorded in it "1"s indicating that "SW23" and "SW24" should be in the conduction state and "0"s indicating that the other switch elements should be in the cut-off state. "Cell 3c voltage value" stores the states of the switch elements which are indicated when the voltage value of the rechargeable battery cell 3c is obtained, and has recorded in it "1"s indicating that "SW25" and "SW26" should be in the conduction state and "0"s indicating that the other switch elements should be in the cut-off state. "Cell 3d voltage value" stores the states of the switch elements which are indicated when the voltage value of the rechargeable battery cell 3d is obtained, and has recorded in it "1"s indicating that "SW27" and "SW28" should be in the conduction state and "0"s indicating that the other switch elements should be in the cut-off state.

The control unit 1 stores the obtained capacitor voltage value Vc in voltage value information 33 in FIG. 3. Voltage value information 33 includes information such as "capacitor voltage value", "cell 3a voltage value", "cell 3b voltage value", "cell 3c voltage value", and "cell 3d voltage value". "Capacitor voltage value" stores the capacitor voltage value Vc, and "cell 3a voltage value" stores a voltage value Vb1 of the rechargeable battery cell 3a. "Cell 3b voltage value" stores a voltage value Vb2 of the rechargeable battery cell 3b, "cell 3c voltage value" stores a voltage value Vb3 of the rechargeable battery cell 3c, and "cell 3d voltage value" stores a voltage value Vb4 of the rechargeable battery cell 3d.

In step S3, the control unit 1 switches the switch elements and obtains a voltage value Vbx of each of the rechargeable battery cells 3 from the voltage measurement unit 2. x is an integer that is 1 or higher, and, in this example, x is from 1 to 4. As an example, the voltage value Vb1 of the rechargeable battery cell 3a is stored in "cell 3a voltage value" of the voltage value information 33, the voltage value Vb2 of the rechargeable battery cell 3b is stored in "cell 3b voltage value", the voltage value Vb3 of the rechargeable battery cell 3c is stored in "cell 3c voltage value", and the voltage value Vb4 of the rechargeable battery cell 3d is stored in "cell 3d voltage value".

In step S4, the control unit 1 determines the maximum value Vbmax and the minimum value Vbmin of the voltage values of all of the rechargeable battery cells 3. As an example, the maximum value Vbmax and the minimum value Vbmin are determined with reference to "cell 3a voltage value", "cell 3b voltage value", "cell 3c voltage value", and "cell 3d voltage value" of the voltage value information 33. The control unit 1 then stores the obtained maximum value Vbmax and minimum value Vbmin in maximum-value/minimum-value information 34 in FIG. 3. The maximum-value/minimum-value information 34 includes information such as "maximum value" and "minimum value". In this example, Vbmax is stored in "maximum value" and Vbmin is stored in "minimum value".

In step S5, the control unit 1 determines whether or not the charger 5 is capable of supplying electricity; when it is determined that the charger 5 is capable of supplying electricity, the process will proceed to step S7 (Yes), and, when it is determined that the control unit 1 is incapable of supplying electricity, the process will proceed to step S6 (No). It may be determined whether or not electricity can be supplied by determining whether or not the charger 5 has been connected to an apparatus in which the charge and discharge control apparatus is installed. The process proceeds to step S7 when "1" is stored in the information 31 contained in the generator/charger signal in FIG. 3.

In step S6, the control unit 1 compares a capacitor voltage value Vc with the maximum value Vbmax to determine whether or not Vc ≧ Vbmax; when Vc ≧ Vbmax, the process will proceed to step S7 (Yes), otherwise the process will proceed to step S8 (No). As an example, the determination is made by comparing the capacitor voltage value of the voltage value information 33 with the maximum value of the maximum-value/minimum-value information 34.

In step S7, the control unit 1 performs a first cell balancing process. In step S8, the control unit 1 performs a second cell balancing process.

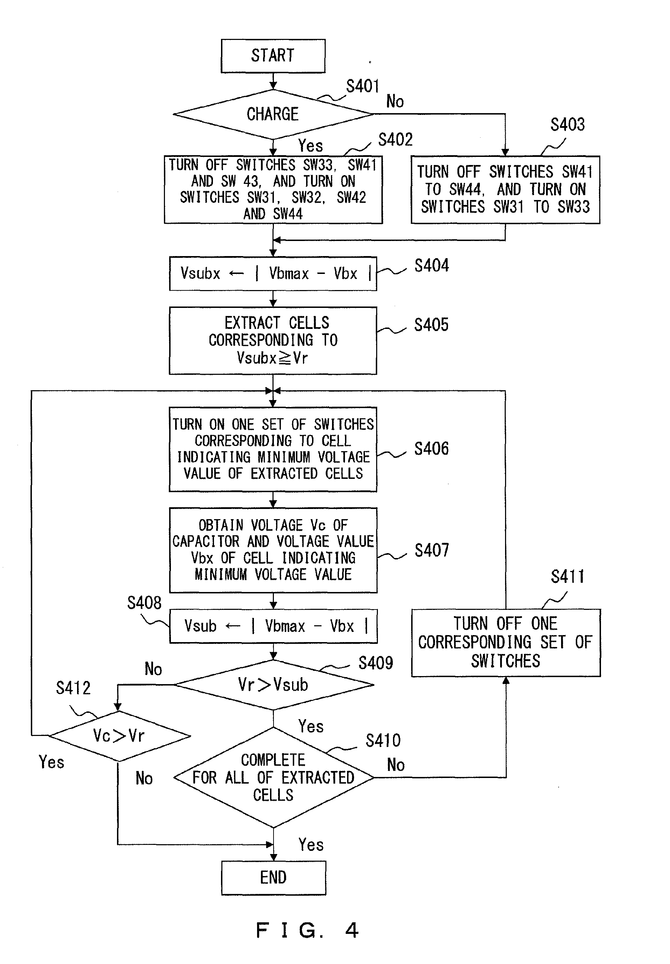

In step S9, the control unit 1 determines, in FIG. 4, which will be described hereinafter, whether charging of all of the rechargeable battery cells 3 extracted to be charged has been completed or not; when the charging is completed, the process will be finished (Yes), otherwise the process will proceed to step S8 (No).

The first cell balancing process will be described hereinafter.

FIG. 4 is a flow diagram illustrating an example of the operation of the first cell balancing process. In step S401, the control unit 1 determines whether or not charging should be performed by the charger 5; for the cell balancing (charging) by the charger 5, the process will proceed to step S402 (Yes), and, for the cell balancing by the capacitor C1, the process will proceed to step S403 (No). As an example, the process will proceed to step S402 when "1" is stored in the information 31 contained in the generator/charger signal in FIG. 3. The process will proceed to step S403 when "0" is stored in the information 31 contained in the generator/charger signal in FIG. 3.

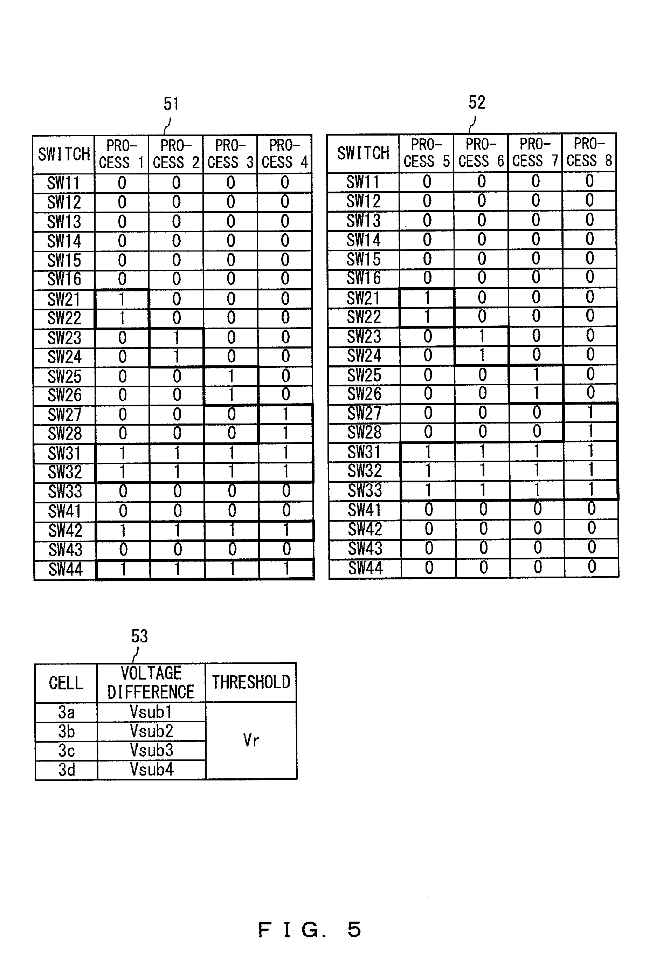

In step S402, the control unit 1 outputs a control signal that turns off the switch elements SW33, SW41 and SW43 (cut-off state) and another control signal that turns on the switch elements SW31, SW32,SW42 and SW44 (conduction state). This is a situation in which the first cell balancing process is performed using the charger 5. The control unit 1 generates the control signals by referring to, for example, cell balancing information 51 in FIG. 5. FIG. 5 is a diagram illustrating an example of the data structure of information used in the first cell balancing. The cell balancing information 51 in FIG. 5 includes information such as "switch", "process 1", "process 2", "process 3", and "process 4". "Switch" stores information for identifying the switch elements SW11-SW16, SW21-SW28, SW31-SW33, SW41-SW44. In this example, "SW11"-"SW16", "SW21"-"SW28", "SW31"-"SW33", "SW41"-"SW44" are indicated. "Process 1" indicates the states of the switch elements which are indicated when the rechargeable battery cell 3a is charged, and, in this example, "process 1" stores "1"s indicating that "SW21", "SW22", "SW31", "SW32", "SW42" and "SW44" should be turned on (conduction state) and "0"s indicating that the other switch elements should be turned off (cut-off state). "Process 2" indicates the states of the switch elements which are indicated when the rechargeable battery cell 3b is charged, and, in this example, "process 2" stores "1"s indicating that "SW23", "SW24", "SW31", "SW32", "SW42" and "SW44" should be turned on (conduction state) and "0"s indicating that the other switch elements should be turned off (cut-off state). "Process 3" indicates the states of the switch elements which are indicated when the rechargeable battery cell 3c is charged, and, in this example, "process 3" stores "1"s indicating that "SW25", "SW26", "SW31", "SW32", "SW42" and "SW44" should be turned on (conduction state) and "0"s indicating that the other switch elements should be turned off (cut-off state). "Process 4" indicates the states of the switch elements which are indicated when the rechargeable battery cell 3d is charged, and, in this example, "process 4" stores "1"s indicating that "SW27", "SW28", "SW31", "SW32", "SW42" and "SW44" should be turned on (conduction state) and "0"s indicating that the other switch elements should be turned off (cut-off state).

In step S403, the control unit 1 outputs a control signal that turns off the switch elements SW41 to SW44 (cut-off state) and another control signal that turns on the switch elements SW31 to SW33 (conduction state). This is a situation in which the first cell balancing process is performed using the capacitor C1. The control unit 1 generates the control signals by referring to, for example, cell balancing information 52 in FIG. 5. The cell balancing information 52 in FIG. 5 includes information such as "switch", "process 5", "process 6", "process 7", and "process 8". "Switch" stores information for identifying the switch elements SW11-SW16, SW21-SW28, SW31-SW33, SW41-SW44. In this example, "SW11"-"SW16", "SW21"-"SW28", "SW31"-"SW33" and "SW41"to "SW44" are indicated. "Process 5" indicates the states of the switch elements which are indicated when the rechargeable battery cell 3a is charged, and, in this example, "process 5" stores "1"s indicating that "SW21", "SW22", "SW31", "SW32" and "SW33" should be turned on (conduction state) and "0"s indicating that the other switch elements should be turned off (cut-off state). "Process 6" indicates the states of the switch elements which are indicated when the rechargeable battery cell 3b is charged, and, in this example, "process 6" stores "1"s indicating that "SW23", "SW24", "SW31", "SW32" and "SW33" should be turned on (conduction state) and "0"s indicating that the other switch elements should be turned off (cut-off state). "Process 7" indicates the states of the switch elements which are indicated when the rechargeable battery cell 3c is charged, and, in this example, "process 7" stores "1"s indicating that "SW25", "SW26", "SW31" "SW32" and "SW33" should be turned on (conduction state) and "0"s indicating that the other switch elements should be turned off (cut-off state). "Process 8" indicates the states of the switch elements which are indicated when the rechargeable battery cell 3d is charged, and, in this example, "process 8" stores "1"s indicating that "SW27", "SW28", "SW31", "SW32" and "SW33" should be turned on (conduction state) and "0"s indicating that the other switch elements should be turned off (cut-off state) .

In step S404, the control unit 1 determines the difference between the maximum value Vbmax and the voltage value of each of the rechargeable battery cells 3 (Vsubx ← | Vbmax-Vbx |). The "x" in each of "Vsubx" and "Vbx" is an integer that is one or greater. That is, the difference between the maximum value Vbmax and the voltage value Vb1 of the rechargeable battery cell 3a is determined and defined as a voltage difference Vsub1. The difference between the maximum value Vbmax and the voltage value Vb2 of the rechargeable battery cell 3b is determined and defined as a voltage difference Vsub2. The difference between the maximum value Vbmax and the voltage value Vb3 of the rechargeable battery cell 3c is determined and defined as a voltage difference Vsub3. The difference between the maximum value Vbmax and the voltage value Vb4 of the rechargeable battery cell 3d is determined and defined as a voltage difference Vsub4. The maximum value Vbmax is indicated by the maximum-value/minimum-value information 34 in FIG. 3. The voltage value Vbx of each of the rechargeable battery cells 3 is indicated by the voltage value information 33 in FIG. 3.

Meanwhile, the control unit 1 stores the determined voltage difference Vsubx in voltage difference information 53. The voltage difference information 53 in FIG. 5 includes information such as "cell", "voltage difference", and "threshold". "Cell" is information for identifying the rechargeable battery cells 3. In this example, "3a" indicating the rechargeable battery cell 3a, "3b" indicating the rechargeable battery cell 3b, "3c" indicating the rechargeable battery cell 3c, and "3d" indicating the rechargeable battery cell 3d are stored. "Voltage difference" stores the differences between the maximum value Vbmax and the voltage value Vbx of the rechargeable battery cells 3. In this example, "Vsub1" indicating the voltage difference corresponding to the rechargeable battery cell 3a, "Vsub2" indicating the voltage difference corresponding to the rechargeable battery cell 3b, "Vsub3" indicating the voltage difference corresponding to the rechargeable battery cell 3c, and "Vsub4" indicating the voltage difference corresponding to the rechargeable battery cell 3d are stored. "Threshold" stores a value used to determine whether charging should be performed or not.

In step S405, the control unit 1 compares a predetermined threshold Vr with each voltage difference and extracts the rechargeable battery cell 3 corresponding to Vsub ≧ Vr. The predetermined threshold Vr is used to determined whether charging should be performed or not, and charging is not performed when the difference between the maximum value Vbmax and the voltage value Vbx of the rechargeable battery cell 3 is lower than or equal to the predetermined threshold Vr. The extracted rechargeable battery cell 3 is stored in, for example, the storage unit 6.

In step S406, the control unit 1 turns on one set of switch elements corresponding to the rechargeable battery cell 3 indicating the minimum voltage value among the rechargeable battery cells 3 extracted in step S405. As an example, the control unit 1 detects the rechargeable battery cell 3 indicating the minimum voltage value by referring to the maximum-value/minimum-value information 34 and outputs a control signal for turning on (conduction state) a switch element corresponding to the detected rechargeable battery cell 3.

In step S407, the control unit 1 obtains, from the voltage measurement unit 2, the voltage value Vbx of the rechargeable battery cell 3 extracted in step S406. The current capacitor voltage Vc is also obtained.

In step S408, the control unit 1 calculates the difference between the maximum value Vbmax and the voltage value of the rechargeable battery cell 3 obtained in step S407, (Vsub ← | Vbmax-Vbx |). "x" of "Vbx" indicates the rechargeable battery cell 3 obtained in step S407. The maximum value Vbmax is indicated by maximum-value/minimum-value information 34 in FIG. 3. Meanwhile, the control unit 1 stores the calculated voltage difference Vsub in the voltage difference information 53.

In step S409, the control unit 1 compares the predetermined threshold Vr with the voltage difference calculated in step S408; when Vr > Vsub, the process will proceed to step S410 (Yes), and, when Vr ≦ Vsub, it will proceed to step S412 (No), where charging is further performed.

In step S410, the control unit 1 determines whether or not charging has been completed for all of the rechargeable battery cells 3 extracted in step S405; when the charging is completed, the process will be finished (Yes), and, when it is not completed, the process will shift to step S411 (No).

In step S411, the control unit 1 turns off the corresponding set of switch elements turned on in step S406.

In step S412, the control unit 1 compares the predetermined threshold Vr with the capacitor voltage Vc obtained in step S407; when Vc > Vr, the process will proceed to step S406 (Yes), and, when Vc ≦ Vr, the process will be finished (Yes).

Performing the aforementioned first cell balancing process achieves the advantages of increasing the capacity of rechargeable battery cells and equalizing their voltages. Moreover, electricity is supplied from the charger 5 in accordance with the maximum value Vbmax, and hence, unlike conventional passive cell balancing, rechargeable battery cells are not discharged, so that the capacity of the rechargeable battery cells can be increased after cell balancing. Accordingly, as an example, the cruising distance of vehicles may be extended.

Meanwhile, using the charger 5, cell balancing may be performed at the time of charging.

In addition, using the capacitor C1, cell balancing may be performed at times other than the time of charging. Also in this case, the capacity of the rechargeable battery cells may be increased after cell balancing. Accordingly, as an example, the cruising distance of vehicles may be extended.

The second cell balancing process will be described in the following.

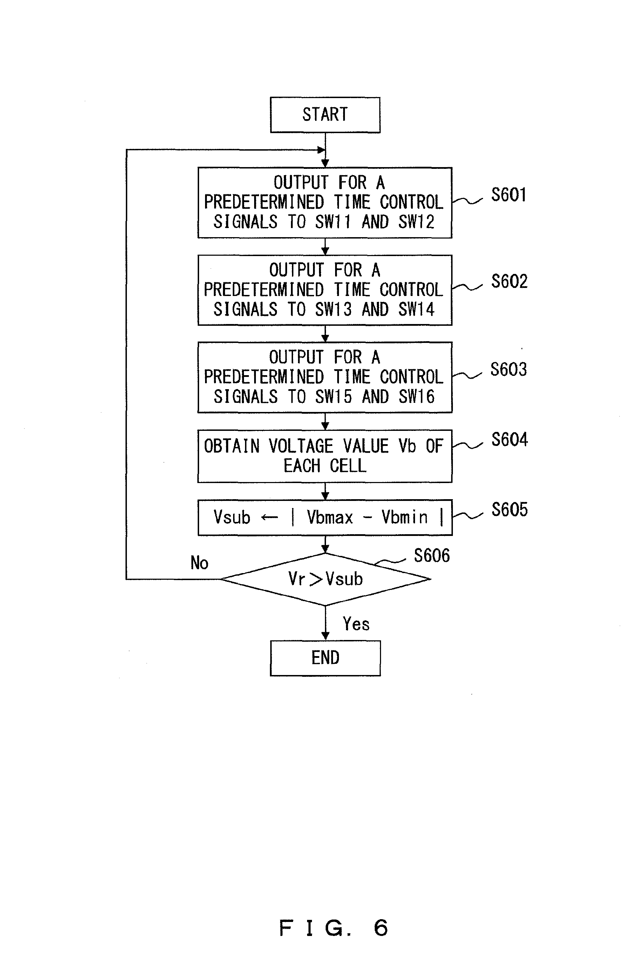

FIG. 6 is a flow diagram illustrating an example of the operation of the second cell balancing process. In step S601, the control unit 1 outputs a predetermined time control signal to the switch elements SW11 and SW12.

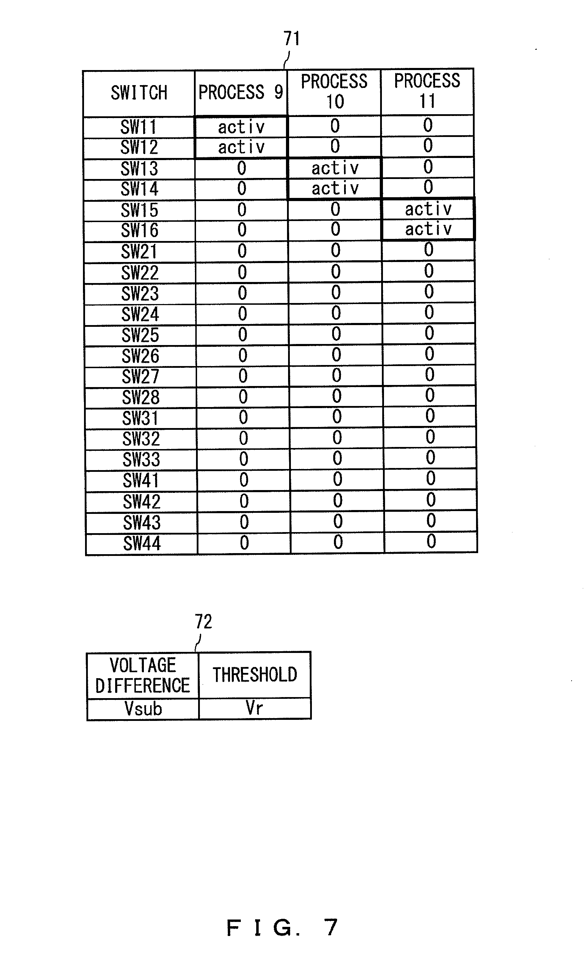

The control unit 1 generates a control signal by, for example, referring to cell balancing information 71 in FIG. 7. FIG. 7 is a diagram illustrating an example of the data structure of information used in second cell balancing. The cell balancing information 71 in FIG. 7 includes information such as "switch", "process 9", "process 10" and "process 11". "Switch" stores information for identifying the switch elements SW11-SW16, SW21-SW28, SW31-SW33 and SW41-SW44. In this example, "SW11"-"SW16", "SW21"-"SW28", "SW31"-"SW33" and "SW41"-"SW44" are indicated. "Process 9" indicates the states of the switch elements which are indicated when the voltage values of the rechargeable battery cells 3a and 3b are equalized, and, in this example, a pulse signal is output to "SW11" and an inversion pulse signal is output to "SW12" (Active). "0"s are stored indicating that the other switch elements should be turned off (cut-off state). "Process 10" indicates the states of the switch elements which are indicated when the voltage values of the rechargeable battery cells 3b and 3c are equalized, and, in this example, a pulse signal is output to "SW13" and an inversion pulse signal is output to "SW14" (Active). "0"s are stored indicating that the other switch elements should be turned off (cut-off state). "Process 11" indicates the states of the switch elements which are indicated when the voltage values of the rechargeable battery cells 3c and 3d are equalized, and, in this example, a pulse signal is output to "SW15" and an inversion pulse signal is output to "SW16" (Active). "0"s are stored indicating that the other switch elements should be turned off (cut-off state).

In step S602, the control unit 1 outputs for a predetermined time control signals to the switch elements SW13 and SW14. In step S603, the control unit 1 outputs for a predetermined time control signals to the switch elements SW15 and SW16.

The control signals are pulse signals, and they may be generated using, for example, a technology of generating a Pulse Width Modulation (PWM) signal.

In step S604, the control unit 1 obtains the voltage value Vbx of the rechargeable battery cell 3 from the voltage measurement unit 2. In this example, the voltage values Vb1, Vb2, Vb3 and Vb4 of the rechargeable battery cells 3a, 3b, 3c and 3d are obtained from the voltage measurement unit 2.

In step S605, the control unit 1 detects the maximum value Vbmax and the minimum value Vbmin of the voltage values Vb1, Vb2, Vb3 and Vb4 obtained in step S604. The control unit 1 then calculates the voltage difference between the maximum value Vbmax and the minimum value Vbmin. That is, "| Vbmax-Vbmin |" is calculated and defined as the voltage difference Vsub. As an example, the voltage difference Vsub and a threshold may be stored in information 72 in FIG. 7 stored in the storage unit 6. The information 72 in FIG. 7 includes information such as "voltage difference" and "threshold". The voltage difference Vsub is stored as "voltage difference", and a predetermined threshold Vr used to determine whether to or not to perform cell balancing is stored as "threshold".

In step S606, the control unit 1 compares the threshold Vr with the voltage difference Vsub; when Vr > Vsub, the process will be finished (Yes), and, when Vr ≦ Vsub, the process will shift to step S601 (No).

Performing the aforementioned second cell balancing process achieves the advantages of equalizing the voltages of rechargeable battery cells even during charging or when the capacity of the capacitor C1 is insufficient.

The present invention is not limited to the aforementioned embodiment, and various modifications and changes can be made to the invention without departing from the spirit of the invention.

A charge and discharge control apparatus equalizes the voltages of rechargeable battery cells by using a charger or a capacitor charged by an external power source, by using a first cell balancing unit which charges the rechargeable battery cells until their voltage values become equal to the maximum voltage value of the rechargeable battery cells, and an inductor for charging or discharging adjacent rechargeable battery cells from among the rechargeable battery cells, and by using a second cell balancing unit which sequentially equalizes the voltages of the adjacent rechargeable battery cells.

## Claims

1. A charge and discharge control apparatus for charging and discharging serially connected rechargeable battery cells (3a-3d), the apparatus comprising:
a voltage measurement unit (2) to measure a voltage of each of the rechargeable battery cells and a voltage of a capacitor (C1) that charges the rechargeable battery cells;
a first cell balancing unit to charge the rechargeable battery cells until the voltage of each of the rechargeable battery cells becomes equal to a highest voltage value of the rechargeable battery cells by using a charger (5) or the capacitor charged by an external power source (4);
a second cell balancing unit to sequentially equalize voltages of adjacent rechargeable battery cells from among the rechargeable battery cells by using an inductor (L1-L3), the inductor being for charging or discharging the adjacent rechargeable battery cells; and
a control unit (1) to
cause the charger to charge the rechargeable battery cells using the first cell balancing unit, when the control unit detects that the charger is capable of supplying electricity,
cause the capacitor to charge the rechargeable battery cells using the first cell balancing unit, when the charger is not connected and when the voltage value of the capacitor is equal to or higher than the highest voltage value of the rechargeable battery cells, and
cause the second cell balancing unit to equalize the voltages of the rechargeable battery cells, when the charger is not connected and when the voltage value of the capacitor is lower than the highest voltage value.

2. The charge and discharge control apparatus according to claim 1, wherein
in the first cell balancing unit which causes the capacitor to charge the rechargeable battery cells (3a-3d),
the capacitor (C1) is connected in parallel to each of the rechargeable battery cells via a first switch (SW21, SW23, SW25, SW27) and a second switch (SW22, SW24, SW26, SW28) provided at each of the rechargeable battery cells, and
a positive terminal of each of the rechargeable battery cells is connected to one terminal of the first switch, a negative terminal of each of the rechargeable battery cells is connected to one terminal of the second switch, another terminal of each of the first switches is connected to one terminal of the capacitor, and another terminal of each of the second switches is connected to another terminal of the capacitor.

3. The charge and discharge control apparatus according to claim 1, wherein
in the first cell balancing unit which causes the charger (5) to charge the rechargeable battery cells (3a-3d),
the charger is connected in parallel to each of the rechargeable battery cells via a first switch (SW21, SW23, SW25, SW27) and a second switch (SW22, SW24, SW26, SW28) provided at each of the rechargeable battery cells, and
a positive terminal of each of the rechargeable battery cells is connected to one terminal of the first switch, a negative terminal of each of the rechargeable battery cells is connected to one terminal of the second switch, another terminal of each of the first switches is connected to one terminal of the charger, and another terminal of each of the second switches is connected to another terminal of the charger.

4. The charge and discharge control apparatus according to claim 1, wherein
the second cell balancing unit includes
a voltage equalization circuit wherein one terminal of the inductor (L1-L3) is connected to a negative terminal of one rechargeable battery cell of the adjacent rechargeable battery cells and a positive terminal of another rechargeable battery cell of the adjacent rechargeable battery cells, a positive terminal of the one rechargeable battery cell is connected to one terminal of a third switch (SW11, SW13, SW15), a negative terminal of the another rechargeable battery cell is connected to one terminal of a fourth switch (SW12, SW14, SW16), and another terminal of the third switch, another terminal of the fourth switch, and another terminal of the inductor are connected to each other, and
the control unit outputs a pulse signal to the third switch of the voltage equalization circuit, outputs an inversion pulse signal, which is an inversion of the pulse signal, to the fourth switch, and, when voltages of the adjacent rechargeable battery cells are equalized, selects next adjacent rechargeable battery cells.
